# EUROPEAN PATENT APPLICATION

(11) **EP 2 851 721 A1**
(43) Date of publication of application: **25.03.2015**
(21) Application number: 14185594.0
(22) Date of filing: 19.09.2014
(51) Int. Cl.: G02B 6/38, G02B 6/42, G06F 1/16

(54) **Wireless flat optical connector**

(30) Priority: 20.09.2013 US 201314033055
(71) Applicant: Intel IP Corporation, Santa Clara, CA 95054 (US)
(72) Inventor: Quiet, Duane, Hillsboro, OR 97123 (US); Bookhardt, Gary, Beaverton, OR 97007 (US); Altenburg, Michael, Hillsboro, OR 97124 (US)
(74) Representative: Jennings, Vincent Louis

(57) **Abstract**

Provided herein is a system that includes a communication link between a first electronic device and a second electronic device. The communication link includes a first flat connector disposed in the first electronic device and a second flat connector disposed in the second electronic device. Each of the flat connectors includes a lens coupled to a fiber optic cable. Data is transferred through the communication link from the first flat connector to the second flat connector over an air gap between the first flat connector and the second flat connector.

## Description

### Technical Field

The present techniques relate generally to a connector for an electronic device. More particularly, the present techniques relate to a method and apparatus for an optical, no-wire connector for an electronic device.

### Background Art

Electronic devices currently include multiple connectors. These connectors permit the electronic devices to connect to other electronic devices, such as tablets, cellular phones, smartphones, laptops, memory devices, memory card readers, docking stations, chargers, cameras, etc. For example, a mobile electronic device can be coupled to a base or docking station to increase the functionality of the mobile electronic device. These connectors typically include wires and male-to-female connections to connect the electronic devices.

### Brief Description of the Drawings

Fig. 1 is an illustration of an example of an electronic device with a wireless flat connector.
Fig. 2 is a block diagram of an example of a communication link that uses wireless flat connectors.
Fig. 3 is a process flow diagram of an example of a method of transferring data via a wireless flat connector.

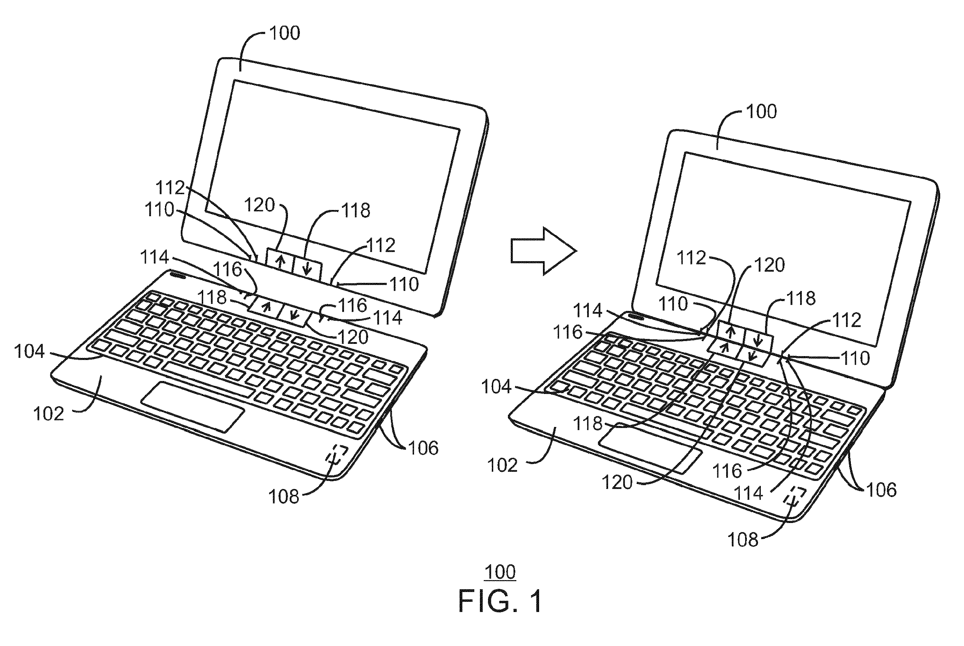

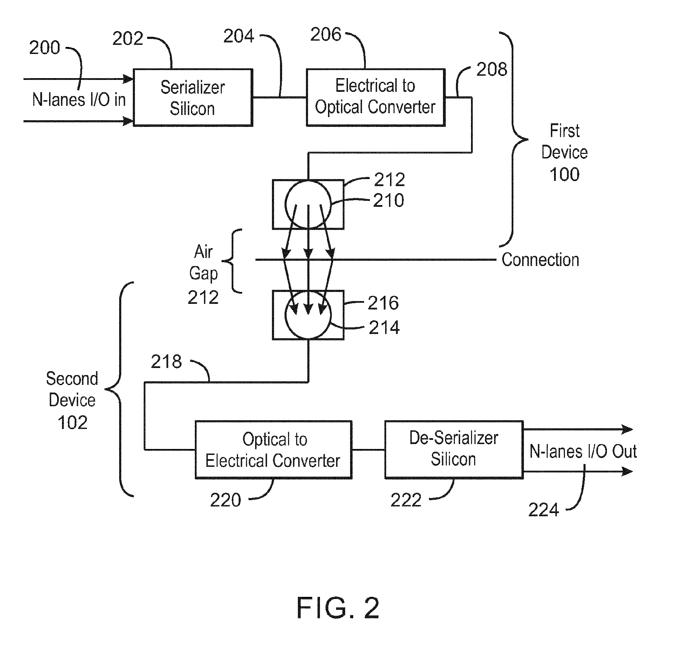

The same numbers are used throughout the disclosure and the figures to reference like components and features. Numbers in the 100 series refer to features originally found in Fig. 1; numbers in the 200 series refer to features originally found in Fig. 2; and so on.

### Description of the Embodiments

Many electronic devices are connected to other electronic devices using wired male-to-female connections. A male-to-female connection typically includes a cable, the ends of which include male or female connectors. Examples of male-to-female connections include universal serial bus (USB) connections, eSATA connections, and HDMI connections, among others. These connectors may be vulnerable to physical damage during transportation due to protrusions and openings. For example, protrusions can be broken or partially damaged during transportation. In addition, openings are susceptible to damage by water and insertion of items other than the designated complimentary connector. Embodiments of the present techniques provide for a flat connector that does not include any openings or protrusions. A flat connector may be placed adjacent to, but not inserted in, a corresponding connector. In this way, the vulnerabilities of male-female connections can be avoided.

In a flat connector, a wireless connection is created in which data is transferred across an air gap existing between the connectors placed next to each other. An example of a wireless solution for transferring data is Bluetooth. However, Bluetooth connections suffer from limitations in protocols and the amount of data which can be transferred via the Bluetooth connection. Another example of a wireless solution is cloud computing. However, data placed in a cloud can be vulnerable to poor security and privacy violations because the data is no longer in control of the user. In addition, a network connection is used to access the cloud. If a user does not have access to a network connection, the user is unable to access the data. An additional example of a wireless solution is creation of a local wireless connection between electronic devices. However, in order to create the local wireless connection, a transmitter/receiver is included in each electronic device, increasing the architectural complexity of the electronic devices. The electronic devices are subject to increase costs in terms of power and resource usage. However, by using an optical connector, large amounts of data can be transferred between electronic devices without significantly increasing the architectural complexity of the electronic devices or resulting in unduly high levels of power and resource usage. Optical connections work as long as a line of sight between the connections is preserved.

Accordingly, an electronic device can include one or more communication links formed by flat connectors. In some embodiments, the flat connectors can be flush or nearly flush with an exterior surface of an enclosure of the electronic device. For example, each flat connector can include a lens and a fiber optic cable coupled to the lens. The flat connector can be placed near another flat connector to enable transmission of data across an air gap between the flat connectors. Referring to the connectors as "flat" means that they do not have fastening components that are used to physically attach the connectors directly to one another. In other words, there are no recesses or protrusions, as in complementary male and female connectors, that facilitate a physical attachment of the connectors themselves. The flat connectors may be positioned in close proximity to one another with a small air gap between them. Rather than being held in place by fastening components that are a part of the connector itself, the alignment of the flat connectors is facilitated by their placement on the devices that are communicatively coupled by the link. In some embodiments, the coupled devices may have attachment mechanisms, such as a hinge for example. The attachment mechanisms used to physically couple the devices may hold the devices together in relative position that is known and also facilitates the proper alignment of the flat connectors. The lens provides more flexibility in the alignment of the connectors compared to using fiber optic cable alone.

Fig. 1 is an illustration of an example of an electronic device with a wireless flat connector. The first electronic device 100 may be virtually any type of electronic device including, for example and without limitation, a cellular phone, such as a smartphone, a personal digital assistant (PDA), wireless headphones, a computer, a laptop computer, a tablet computer, a television, a video player or receiver, gaming console, and the like. The second electronic device 102 may also be virtually any type of electronic device. For example, the first electronic device 100 can be a tablet computer and the second electronic device 102 can be a base or a docking station. In another example, the first electronic device 100 can be a monitor of a clamshell laptop computer and the second electronic device 102 can be a base of the clamshell laptop computer. In a further example, the first electronic device 100 can be a wireless headset and the second electronic device 102 can be a charging station.

In an example, the second electronic device 102 can include additional functionality as compared to the first electronic device 100 and the first electronic device 100 can be coupled to the second electronic device 102 to gain access to the increased functionality. For example, the second electronic device 102 can include a keyboard 104, I/O device connections 106, such as USB connections, and a memory device 108, among others. The memory device 108 may be configured as random access memory, read only memory, flash memory, EEPROM, removable memory such as an SD card or USB memory stick, or any combination of the foregoing. Memory device 104 can include a non-transitory medium that stores computer-readable instructions that are executable by a CPU.

The first electronic device 100 can include alignment pins 110 and power pins 112. The second electronic device 102 can include alignment pins 114 and power pins 116. When the first electronic device 100 and the second electronic device 102 are coupled, the alignment pins can ensure that the first electronic device 100 is properly aligned with the second electronic device 102 for data transfer. Further, when the first electronic device 100 and the second electronic device 102 are coupled, the power pins 112 can be coupled with the power pins 116 to exchange power. In an example, the power pins 112 and 116 can be magnetic pogo pins can carry up to 5 Amps of current per pin and magnets are used to hold the two interfaces together and also can be used as alternate high speed I/O signals. In a further example, the alignment pins 110 and 114 and/or the power pins 112 and 116 can hold the first electronic device 100 coupled to the second electronic device 102 until the user disconnects the first electronic device 100 from the second electronic device 102. Each of the pins can be flush with the surfaces of the electronic devices 100 and 102, can extend from the surfaces of the electronic devices 100 and 102, or can be retractable into the surfaces of the electronic devices 100 and 102. While pins are described here to provide power and alignment, it is to be understood that any method of aligning the first device 100 and the second device 102, as well as any method of exchanging power, can be applied here.

A communication link can be established between the first electronic device 100 and the second electronic device 102 using flat connectors 118 and 120. The flat connectors 118 and 120 are referred to herein as transmit connectors 118 and receive connectors 120. The transmit connectors 118 include a dispersion lens that disperses the light from the fiber optic cable and can be used to transmit data to a corresponding receive connector. The receive connectors include a focusing lens that focuses the received light to the fiber optic cable to which it is attached. Together, each transmit connector 118 and its corresponding receive connector 120 make up a communication link between the first electronic device 100 and second electronic device 102. Any suitable number of links may be included. Each connector pair may be configured to transmit data in a particular direction. As shown in Fig. 1, there are two communication links between the electronic devices 100 and 102, one that transmits data from the first electronic device 100 to the second electronic device 102 and one that transmits data from the second electronic device 102 to the first electronic device 100. However, any combinations links and directionalities is possible.

As described above, each of the connectors 118 and 120 can include a lens. Each lens can be included in a holder to form a lens assembly. Each lens can be any suitable size and shape. The size and shape of the lens can be determined by the manufacturer. When the first electronic device 100 is coupled to the second electronic device 102 through the link, optical signals can be transmitted between the connectors 118 and 120 across an air gap to transfer data between the first electronic device 100 and the second electronic device 102. The width of the air gap can be within a range of 0.5mm - 6mm, such as 2mm - 4 mm. In an example, the width of the air gap can be greater than 4 mm. The lenses can be passive lenses, in which the lenses are not moved or focused.

In an example, the first electronic device 100 can be a mobile device, such as a tablet and the second electronic device 102 can be a base or a docking station. The first electronic device 100 can be coupled to the second electronic device 102 via the lenses 118 and 120. In another example, the first electronic device 100 can be a mobile device, such as a tablet, or a display device, such a laptop screen, and the second electronic device 102 can be a base. The lenses 118 and 120 can be included in a hinge that couples the first electronic device 100 and the second electronic device 102 in a clamshell design.

It is to be understood that the illustration of Fig. 1 is not intended to indicate that the electronic devices 100 and 102 are to include all of the components shown in Fig. 1 in every case. Further, any number of additional components can be included within the electronic devices 100 and 102, depending on the details of the specific implementation.

Fig. 2 is a block diagram of an example of a communication link that uses wireless flat connectors. As shown in Fig. 2, the communication link includes a transmit connector 212 with a dispersion lens 210 and a receive connector 216 with a focusing lens 214. Data flows through the link in one direction from the transmit connector 212 of the first device 100 to the receive connector 214 of the second device 102. Although a single communication link is shown, the first electronic device 100 and the second electronic device 102 can include any number of communication links, including communication links that transmit data from the second electronic device 102 to the first electronic device 100.

Each transmit connector 212 can be coupled to serializer silicon 202 and an electrical to optical converter 206. Multiple lanes of electrical signals 200 carrying data can enter a serializer silicon 202. The serializer silicon 202 converts the lanes of electrical signals 200 to a single electrical signal. The single electrical signal is transferred via an electrical cable 204 to an electrical-to-optical (ETO) converter. The ETO converter converts the electrical signal to an optical signal, with the data embedded in the light. The optical signal is transferred via a fiber optic cable 208 to the dispersion lens 210. The dispersion lens 210 can be held in a holder 212 to form a lens assembly. The fiber optic cable 208 can be coupled to the dispersion lens 210. For example, the fiber optical cable 208 can be inserted in an opening in the dispersion lens 210 and held within the opening, such as through the use of an adhesive.

After reaching the dispersion lens 210, the optical signal can be transmitted across an air gap 214 to a focusing lens 214 of the second device 102. The focusing lens 214 and a holder 216 can together be a lens assembly. The received signal can be transferred from the focusing lens 214 via a fiber optic cable 218 to an optical to electrical (OTE) converter 220. The OTE converter 220 can convert the optical signal to an electrical signal. The electrical signal can be transferred to a de-serializer silicon 222. The de-serializer silicon 222 can convert the electrical signal to multiple lanes of electrical signals.

A connector of the first device 100 can include the serializer silicon 202, the ETO convert 206, the fiber optic cable 208, the lens 210, and the lens holder 212. In another example, the connector can include the ETO converter 206, the fiber optic cable 208, the lens 210, and the lens holder 212. In a further example, the connector can include the fiber optic cable 208, the lens 210, and the lens holder 212. Similarly, the connector for the second device 102 can include the lens 214, the lens holder 216, the fiber cable 218 and, optionally, the OTE converter 220 and the de-serializer silicon 222. For example, one or more lanes of electrical signals can be converted to a single lane before or after entering the connector. Similarly, the electrical signal can be converted to an optical signal before or after entering the connector.

While data is shown here as travelling through the connector from the first device 100 to the second device 102, it is to be understood that data can also travel from the second device 102 to the first device 100 through a communication link that includes a transmit connector on the second device 102 and a receive connector on the first device 100. Further, each of the first device 100 and the second device 102 can include a serializer silicon 202, a de-serializer silicon 222, and ETO converter 206, and an OTE converter 220.

It is to be understood that the block diagram of Fig. 2 is not intended to indicate that the wireless flat connectors are to include all of the components shown in Fig. 2 in every case. Further, any number of additional components can be included within the wireless flat connectors, depending on the details of the specific implementation.

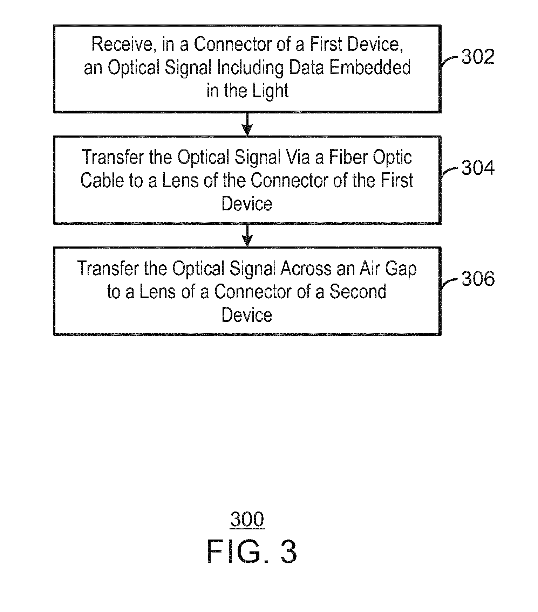

Fig. 3 is a process flow diagram of an example of a method of transferring data via a wireless flat connector. At block 302, an optical signal, which includes data embedded in the light, can be received in a connector of a first device. The optical signal can be a conversion from an electrical signal. The electrical signal can be converted to the optical signal before the optical signal is received in the connector. In another example, the electrical signal can be converted to the optical signal within the connector. The connector can be a wireless, flat connector.

At block 304, the optical signal can be transferred via a fiber optic cable to a lens of the connector of the first device. The lens can be a dispersion lens. A holder can be designed to hold the lens within the connector. The lens and the holder together form a lens assembly. In an example, the lens assembly can include multiple lenses, such as two lenses. The fiber optic cable can be coupled to the lens. For example, the fiber optic cable can be inserted in an opening in the lens and secured with an adhesive.

At block 306, the optical signal can be transmitted across an air gap to a lens of a connector of a second device. The width of the air gap can be within a range of 0.5mm - 6 inches, such as 2mm - 4mm. The second device can be any electronic device, such as a docking station, a charger, etc.

It is to be understood that the process flow diagram of Fig. 3 is not intended to indicate that the method 300 is to include all of the components shown in Fig. 3 in every case. Further, any number of additional components can be included within the method 300, depending on the details of the specific implementation.

### EXAMPLE 1

A system is described herein. The system includes a communication link between a first electronic device and a second electronic device. The communication link includes a first flat connector disposed in the first electronic device and including a first lens coupled to a first fiber optic cable. The communication link also includes a second flat connector disposed in the second electronic device and including a second lens coupled to a second fiber optic cable. Data can be transferred through the communication link from the first flat connector to the second flat connector over an air gap between the first flat connector and the second flat connector.

The first electronic device can be a lid comprising a display and the second electronic device can be a base including a keyboard. The lid and the base can be separable and can be coupled together by a hinge, and the first flat connector and the second flat connector can be positioned near one another when the lid and the base are coupled together. The system can include alignment pins to position the first flat connector and the second flat connector near each other. The first lens can be a dispersion lens and the second lens can be a focusing lens. The system can include a second communication link including a third flat connector in the lid and a fourth flat connector in the base. Data can be transferred through the second communication link in the opposite direction compared to the first communication link. The first electronic device and the second electronic device can include circuitry to convert an electrical signal to an optical signal for transmission across the link. The first electronic can be a laptop computer and the second electronic device can be a docking station. The first lens can be flush with an outer housing of the first electronic device and the second lens can be flush with an outer housing of the second electronic device.

### EXAMPLE 2

A method is described herein. The method includes converting an electrical signal to an optical signal within a first electronic device and transmitting the optical signal to a first lens disposed in the first electronic device via an optical cable. The method can also include receiving the optical signal at a second lens disposed in a second electronic device. The method further includes converting the optical signal into another electrical signal within the second electronic device.

The first lens can be a dispersion lens and the second lens can be a focusing lens. The method can include transmitting a second optical signal to a dispersion lens disposed in the second electronic device via an optical cable and receiving the second optical signal at a focusing lens disposed in a first electronic device. The first lens can be flush with an outer housing of the first electronic device and the second lens can be flush with an outer housing of the second electronic device. The first electronic device can include a display and the second electronic device can include a keyboard.

### EXAMPLE 3

An electronic device is described herein. The electronic device can include a flat connector configured to transmit data to another device, the flat connector including a fiber optic cable coupled to a dispersion lens, wherein the electronic device transmits the data by sending an optical signal over an air gap.

The electronic device can include a second flat connector configured to receive data from the other device, the second flat connector including a second fiber optic cable coupled to a focusing lens, wherein the electronic device receives the data by receiving an optical signal over the air gap. The dispersion lens can be flush with an outer housing of the electronic device. The electronic device can be physically coupled to the other device, and the coupled can cause the dispersion lens to align with a focusing lens of the other device. The electronic device can include circuitry to convert an electrical signal to the optical signal. The electronic device can be a separable portion of a computing device with a clamshell form factor. The electronic device can be a laptop computer. The electronic device can be a docking station.

It is to be understood that specifics in the aforementioned examples may be used anywhere in one or more embodiments. For instance, all optional features of exemplary devices described above may also be implemented with respect to any of the other exemplary devices and/or the method described herein. Furthermore, although flow diagrams and/or state diagrams may have been used herein to describe embodiments, the present techniques are not limited to those diagrams or to their corresponding descriptions. For example, the illustrated flow need not move through each box or state or in exactly the same order as depicted and described.

The present techniques are not restricted to the particular details listed herein. Indeed, those skilled in the art having the benefit of this disclosure will appreciate that many other variations from the foregoing description and drawings may be made within the scope of the present techniques. Accordingly, it is the following claims including any amendments thereto that define the scope of the techniques.

In the preceding description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

Some embodiments may be implemented in one or a combination of hardware, firmware, and software. Some embodiments may also be implemented as instructions stored on a machine-readable medium, which may be read and executed by a computing platform to perform the operations described herein. A machine-readable medium may include any mechanism for storing or transmitting information in a form readable by a machine, e.g., a computer. For example, a machine-readable medium may include read only memory (ROM); random access memory (RAM); magnetic disk storage media; optical storage media; flash memory devices; or electrical, optical, acoustical or other form of propagated signals, e.g., carrier waves, infrared signals, digital signals, or the interfaces that transmit and/or receive signals, among others.

An embodiment is an implementation or example. Reference in the specification to "an embodiment," "one embodiment," "some embodiments," "various embodiments," or "other embodiments" means that a particular feature, structure, or characteristic described in connection with the embodiments is included in at least some embodiments, but not necessarily all embodiments, of the present techniques. The various appearances of "an embodiment," "one embodiment," or "some embodiments" are not necessarily all referring to the same embodiments. Elements or aspects from an embodiment can be combined with elements or aspects of another embodiment.

Not all components, features, structures, characteristics, etc. described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

It is to be noted that, although some embodiments have been described in reference to particular implementations, other implementations are possible according to some embodiments. Additionally, the arrangement and/or order of circuit elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

## Claims

1. A system with a communication link, comprising:
a communication link between a first electronic device and a second electronic device, the communication link comprising:
a first flat connector disposed in the first electronic device and comprising a first lens coupled to a first fiber optic cable; and
a second flat connector disposed in the second electronic device and comprising a second lens coupled to a second fiber optic cable;
wherein data is transferred through the communication link from the first flat connector to the second flat connector over an air gap between the first flat connector and the second flat connector.

2. The system of claim 1, wherein the first electronic device is a lid comprising a display and the second electronic device is a base comprising a keyboard.

3. The system of claim 2, wherein the lid and the base are separable and are coupled together by a hinge, and the first flat connector and the second flat connector are positioned near one another when the lid and the base are coupled together.

4. The system of claim 1, 2, or 3, wherein the first lens is a dispersion lens and the second lens is a focusing lens.

5. The system of claim 1, 2, 3, or 4, comprising a second communication link comprising a third flat connector in the lid and a fourth flat connector in the base.

6. The system of claim 1, 2, 3, 4, or 5, wherein the first lens is flush with an outer housing of the first electronic device and the second lens is flush with an outer housing of the second electronic device.

7. A method of transmitting a signal, comprising:
converting an electrical signal to an optical signal within a first electronic device;
transmitting the optical signal to a first lens disposed in the first electronic device via an optical cable;
receiving the optical signal at a second lens disposed in a second electronic device; and
converting the optical signal into another electrical signal within the second electronic device.

8. The method of claim 7, wherein the first lens is a dispersion lens and the second lens is a focusing lens.

9. The method of claim 7 or 8, comprising:
transmitting a second optical signal to a dispersion lens disposed in the second electronic device via an optical cable; and
receiving the second optical signal at a focusing lens disposed in a first electronic device.

10. The method of claim 7, 8, or 9, wherein the first lens is flush with an outer housing of the first electronic device and the second lens is flush with an outer housing of the second electronic device.

11. An electronic device with a connector, comprising:
a flat connector configured to transmit data to another device, the flat connector comprising a fiber optic cable coupled to a dispersion lens, wherein the electronic device transmits the data by sending an optical signal over an air gap.

12. The electronic device of claim 11, comprising a second flat connector configured to receive data from the other device, the second flat connector comprising a second fiber optic cable coupled to a focusing lens, wherein the electronic device receives the data by receiving an optical signal over the air gap.

13. The electronic device of claim 11 or 12, wherein the dispersion lens is flush with an outer housing of the electronic device.

14. The electronic device of claim 11, 12, or 13, wherein the electronic device is physically coupled to the other device, and the coupling causes the dispersion lens to align with a focusing lens of the other device.

15. The electronic device of claim 11, 12, 13, or 14, wherein the electronic device is a separable portion of a computing device with a clamshell form factor.
